# FASCICULE DE BREVET EUROPEEN

(11) **EP 2 879 922 B1**
(45) Date de publication et mention de la délivrance du brevet: **23.01.2019**
(21) Numéro de dépôt: 13756630.3
(22) Date de dépôt: 30.07.2013
(51) Int. Cl.: B60S 1/52, B60S 1/38

(54) **DISPOSITIF DE CONNEXION ENTRE UN BRAS D'ESSUYAGE ET UN BALAI D'ESSUYAGE, COMPRENANT UNE ZONE AMENAGEE POUR RECEVOIR UNE PLURALITE D'ORIFICES DE PROJECTION**
VORRICHTUNG ZUM VERBINDEN EINES WISCHARMS UND EINES WISCHBLATTES MIT EINEM BEREICH ZUR AUFNAHME EINER VIELZAHL VON SPRÜHÖFFNUNGEN
DEVICE FOR CONNECTING A WIPER ARM AND A WIPER BLADE TOGETHER INCLUDING AN AREA ARRANGED TO RECEIVE A PLURALITY OF SPRAY OPENINGS

(30) Priorité: 02.08.2012 FR 1257522
(43) Date de publication de la demande: 10.06.2015
(73) Titulaire: Valeo Systèmes d'Essuyage, 78322 Le Mesnil Saint Denis (FR)
(72) Inventeur: THEBAULT, Denis, F-63000 Clermont Ferrand (FR); BOUSSET, Xavier, F-63115 Mezel (FR)
(74) Mandataire: Callu-Danseux, Violaine
(86) Numéro de dépôt international: PCT/FR2013/051843
(87) Numéro de publication internationale: WO 2014/020282

(56) Documents cités:
- EP-A2- 1 099 609
- WO-A1-2011/160952
- WO-A1-2012/089407

## Description

Le domaine de la présente invention est celui des équipements pour les véhicules, et plus particulièrement celui des équipements pour l'essuyage des vitres d'un véhicule. La présente invention vise un dispositif de connexion assurant une liaison mécanique entre un bras d'essuyage et un balai d'essuyage apte à essuyer un pare-brise ou une vitre arrière du véhicule.

Les véhicules automobiles sont couramment équipés de système d'essuie-glace pour assurer un balayage et un lavage du pare-brise et éviter que la vision qu'a le conducteur de son environnement ne soit perturbée. Ces essuie-glaces sont classiquement entraînés par un bras effectuant un mouvement de va-et-vient angulaire et comportent des balais allongés, porteurs eux-mêmes de lames racleuses réalisées en une matière élastique. Ces lames frottent contre le pare-brise et évacuent l'eau en l'amenant en dehors du champ de vision du conducteur. Les balais sont réalisés sous la forme, soit, dans une version classique, de palonniers articulés qui tiennent la lame racleuse en plusieurs endroits discrets, soit, dans une version plus récente dénommée "flat blade" (pour "lame plate"), d'un ensemble semi-rigide qui maintient la lame racleuse sur toute sa longueur. Dans cette seconde solution, le balai est rattaché au bras tournant de l'essuie-glace par un ensemble constitué d'un connecteur mécanique et d'un adaptateur. Le connecteur mécanique est une pièce qui est sertie directement sur le balai plat, alors que l'adaptateur est une pièce intermédiaire qui permet la fixation du connecteur sur le bras de l'essuie-glace. Ces deux pièces sont reliées l'une à l'autre par un axe transversal qui autorise leur rotation relative, dans un plan perpendiculaire au pare-brise passant par le bras.

Il est connu d'adjoindre au balai d'essuyage une rampe de projection du liquide de lavage du pare-brise. Une telle rampe est formée par un conduit qui s'étend le long du balai d'essuyage selon un axe longitudinal principal d'extension de ce balai. Ce conduit est pourvu d'orifices de projection répartis le long de cet axe, selon une règle de répartition particulière présentée dans le document WO2011/160952A1.

Le document EP1099609 A2 décrit un dispositif de connexion selon le préambule de la revendication 1.

Le connecteur mécanique serti sur le balai d'essuyage interrompt la rampe de projection. Ceci forme un inconvénient majeur, puisqu'une bande du pare-brise située au niveau du connecteur mécanique n'est pas aspergée par le liquide de lavage.

Par ailleurs, ce connecteur mécanique présente des formes extérieures qui gênent toute implantation d'orifices de projection du liquide de lavage. Un tel connecteur mécanique n'est ainsi pas conçu pour respecter la règle de répartition des orifices de projection telle qu'expliquée dans le document précité.

Enfin, un même type de connecteur mécanique peut être utilisé pour des balais d'essuyage de longueurs différentes. La position et la répartition des orifices de projection sont ainsi différentes d'une longueur de balai d'essuyage à une autre. Il faut donc que la zone permette un positionnement variable des orifices de projection.

Le but de la présente invention est donc de résoudre les inconvénients décrits ci-dessus en concevant un dispositif de connexion qui comprend une zone dédiée à l'aménagement des orifices de projection, une telle zone s'étendant le long du dispositif de connexion, de manière à arroser correctement la vitre du véhicule.

L'invention a donc pour objet un dispositif de connexion apte à relier un balai d'essuyage à un bras d'essuyage, comprenant au moins un moyen de solidarisation sur le balai d'essuyage et un moyen de liaison avec le bras d'essuyage, ledit dispositif de connexion comprenant également au moins un conduit dans lequel un liquide est apte à circuler et qui s'étend selon une direction longitudinale d'extension du balai d'essuyage, caractérisé en ce qu'il comprend au moins une zone aménagée le long du conduit permettant une répartition d'une pluralité d'orifices de projection du liquide. La fonction de cette zone est de permettre l'implantation de plusieurs orifices de projection quelque soit la distance qui les séparent, c'est-à-dire sans que cette implantation ne soit gênée par une forme particulière du dispositif de connexion. La zone comprend donc la pluralité d'orifices de projection du liquide de lavage.

La fixation du dispositif de connexion sur le bras d'essuyage peut être opérée indirectement, par exemple via un adaptateur.

La zone aménagée est reconnaissable en ce qu'elle s'étend le long du dispositif de connexion et sur une portion de celui-ci qui fait face au vitrage essuyée par le balai d'essuyage. Cette zone est dépourvue de formes susceptibles de gêner la répartition des orifices de projection selon l'axe longitudinal le long du conduit.

Le dispositif de connexion peut être formé par une embase dans laquelle est ménagé le conduit, ladite embase étant surmontée par un flanc dans lequel est ménagé le moyen de liaison, ladite zone étant aménagée sur une face externe de l'embase. Le moyen de solidarisation du dispositif de connexion sur le balai d'essuyage peut être aménagé au niveau de l'embase.

Selon un exemple de réalisation, la zone est aménagée sur une portion de la face externe opposée au flanc par rapport au conduit. On garantit ainsi que la zone fait au moins en partie face au vitrage sur lequel le liquide de lavage est projeté.

La zone présente une paroi lisse sur au moins 50% de la face externe de l'embase, selon une direction longitudinale d'extension du conduit. Autrement dit, au moins 50% d'une longueur de la zone est dépourvu de formes ou d'aspérités susceptibles d'empêcher un perçage d'un orifice de projection.

Selon un exemple de réalisation, la zone est formée par une rainure pratiquée dans l'embase le long du conduit. Une telle rainure permet une mise en retrait des orifices de projection par rapport à la face externe de l'embase. Une telle mise en retrait contribue à protéger ces orifices de projection des agressions mécaniques extérieures. Elle contribue également à améliorer l'esthétique générale du balai d'essuyage, en masquant la présence des orifices de projection.

La rainure peut être délimitée par un fond lisse au travers duquel est pratiquée la pluralité d'orifices de projection.

Selon un exemple de l'invention, le dispositif de connexion comprend un canal d'alimentation du conduit en liquide, un tel canal étant terminé par un manchon qui débouche de l'embase au niveau de la zone. La présence d'un tel manchon découle du procédé de moulage du dispositif de connexion et sa section est avantageusement inférieure à un espacement entre deux orifices de projection, de manière à ne pas gêner la répartition de ceux-ci.

On notera que le manchon peut être obturé par un dispositif de fermeture du canal, un tel dispositif de fermeture étant par exemple formé par un couvercle monté étanche sur une partie terminale du manchon, ou une bille logée de manière étanche dans le manchon. Dans le cas du couvercle, l'étanchéité est assuré notamment par soudure ultrason ou collage du couvercle sur la partie terminale du manchon.

Selon un exemple de l'invention, il est prévu un espacement non-constant, selon la direction longitudinale, entre les orifices de projection ménagés dans la zone. L'espacement peut être croissant ou décroissant d'une extrémité longitudinale à l'autre du dispositif de connexion.

L'invention concerne également un système d'essuyage d'une vitre d'un véhicule, comprenant un balai d'essuyage relié mécaniquement à un bras d'essuyage au moins par un dispositif de connexion tel que détaillé ci-dessus.

Dans une telle situation, le balai d'essuyage comprend au moins une rampe de projection d'un liquide de lavage de la vitre alimentée en liquide de lavage par le dispositif de connexion. Une telle rampe peut être scindée en deux parties, chacune s'étendant longitudinalement le long du balai d'essuyage de part et d'autre du dispositif de connexion.

La rampe comprend une multiplicité d'orifices d'aspersion, lesdits orifices d'aspersion et lesdits orifices de projection étant répartis selon la direction longitudinale du balai d'essuyage, de manière à respecter un espacement non-constant entre orifices, tout au long du balai d'essuyage. Le principe de répartition des orifices le long du balai d'essuyage n'est ainsi plus interrompu par le dispositif de connexion.

Un tout premier avantage selon l'invention réside dans la possibilité de projeter le liquide de lavage sur une bande du pare-brise devant laquelle le dispositif de connexion passe lors du mouvement de va-et-vient du balai d'essuyage.

Un autre avantage réside dans la possibilité de respecter une règle de répartition des orifices de projection tout le long du balai d'essuyage, y compris au niveau du connecteur mécanique.

Un autre avantage non négligeable réside dans le fait que la zone aménagée permet de ménager les orifices de projection en des points qui varient en fonction de la longueur du balai d'essuyage sur lequel le dispositif de connexion est monté. On standardise ainsi la fabrication d'un même dispositif de connexion, utilisable pour une multiplicité de longueurs de balai d'essuyage, en adaptant seulement la position de la pluralité d'orifices de projection.

D'autres caractéristiques, détails et avantages de l'invention ressortiront plus clairement à la lecture de la description donnée ci-après à titre indicatif en relation avec des dessins dans lesquels :
- la figure 1 est une vue générale, en perspective, d'un système d'essuyage pour un vitrage d'un véhicule automobile selon l'invention,
- la figure 2 est une vue en perspective du dispositif de connexion selon l'invention.

Il faut noter que les figures exposent l'invention de manière détaillée pour mettre en oeuvre l'invention, lesdites figures pouvant bien entendu servir à mieux définir l'invention le cas échéant.

Dans la suite de la description, les dénominations longitudinales ou latérales se réfèrent à l'orientation du balai d'essuyage selon l'invention. La direction longitudinale correspond à l'axe principal du balai d'essuyage dans lequel il s'étend, alors que les orientations latérales correspondent à des droites concourantes, c'est-à-dire qui croisent la direction longitudinale, notamment perpendiculaires à l'axe longitudinal du balai d'essuyage dans son plan de rotation. Pour les directions longitudinales, les dénominations extérieure ou intérieure s'apprécient par rapport au point de fixation du balai sur le bras, la dénomination intérieure correspondant à la partie où le bras et un demi-balai s'étendent. Enfin, les directions référencées comme supérieures ou inférieures correspondent à des orientations perpendiculaires au plan de rotation du balai d'essuyage, la dénomination inférieure contenant le plan du pare-brise.

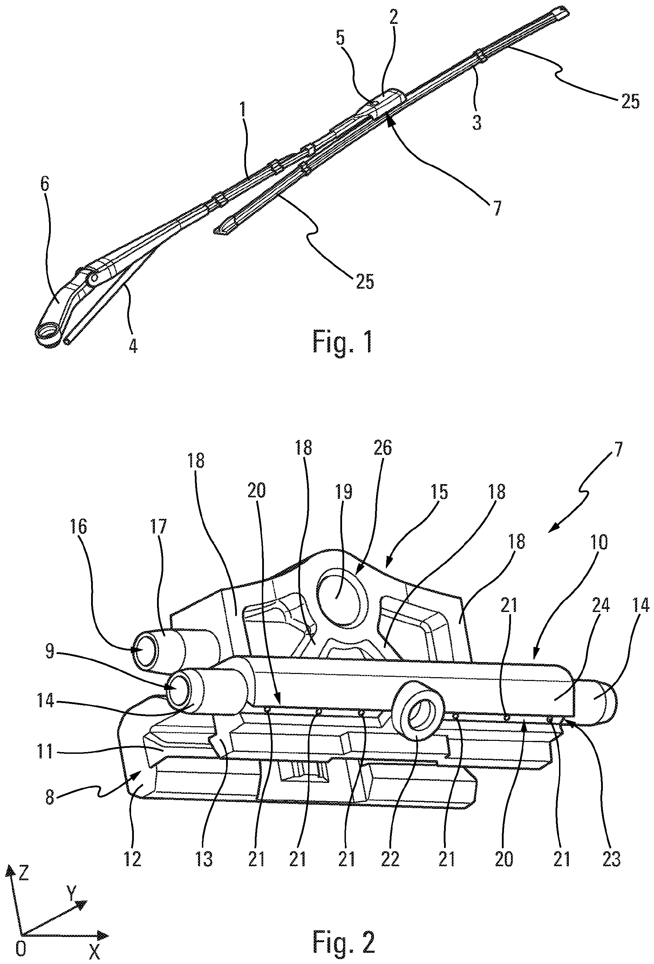

En se référant tout d'abord à la figure 1, on voit un système d'essuyage composé d'un porte-balai ou bras d'essuyage 1 se prolongeant à son extrémité extérieure par une pièce terminale 2, qui est fixée, du côté intérieur, par exemple par un sertissage sur le bras 1. La pièce terminale 2 coopère avec un adaptateur porteur d'un balai d'essuyage 3 par l'intermédiaire d'un dispositif de connexion 7 selon l'invention. L'adaptateur a vocation à, par exemple, s'insérer dans la pièce terminale 2 par un mouvement de translation selon une direction longitudinale, pour venir dans une position d'utilisation, où il est positionné en butée contre une forme coopérante donnée à la pièce terminale 2. Il y est alors fixé de façon réversible au moyen, par exemple, d'un premier bouton escamotable de verrouillage 5, qui est fixé en extrémité d'une languette flexible issue de l'adaptateur et qui coopère avec un évidement pratiqué à cet effet dans la partie supérieure de la pièce terminale 2.

L'adaptateur et le dispositif de connexion 7 sont reliés mécaniquement l'un à l'autre par l'intermédiaire d'un moyen de liaison. Selon un exemple de réalisation, ce moyen de liaison est une liaison pivot ménagée entre l'adaptateur et le dispositif de connexion 7 selon l'invention. Le balai d'essuyage 3 est ainsi maintenu en translation vis-à-vis du bras d'essuyage 1, alors qu'une rotation autour de la liaison pivot est autorisée par le moyen de liaison.

Un tube 4 d'amenée de liquide court le long du bras d'essuyage 1. Ce tube 4 canalise un liquide de lavage du pare-brise pour l'amener au niveau du dispositif de connexion 7 entre le bras d'essuyage 1 et le balai d'essuyage 3.

Le balai d'essuyage 3 comprend au moins une rampe de projection 25 du liquide de lavage de la vitre. Cette rampe de projection 25 est alimentée en liquide de lavage par le dispositif de connexion 7. Une telle rampe de projection 25 est répartie de part et d'autre du dispositif de connexion 7. Elle peut par exemple être formée par un tube pourvu d'orifices d'aspersion rapporté sur le balai d'essuyage. Elle peut également être mise en oeuvre par un déflecteur d'air qui coiffe le balai d'essuyage 3 et dans lequel est ménagé, d'une part un conduit de circulation du liquide de lavage qui s'étend le long de la direction longitudinale du balai d'essuyage 3, et d'autre part une multiplicité d'orifices d'aspersion du liquide de lavage.

A l'extrémité opposée à la pièce terminale 2 par rapport au bras d'essuyage 1, on trouve un entraîneur 6 pourvu d'un trou au travers duquel un arbre d'un moteur d'entraînement ou d'une tringlerie passe en vue de mettre en rotation le système d'essuyage.

En se référant maintenant à la figure 2, on voit plus précisément le dispositif de connexion 7 selon l'invention. Cette pièce est définie dans un repère orthonormé OX-OY-OZ, où la direction OX représente une direction longitudinale, la direction OZ représente une direction verticale et la direction OY représente une direction transversale.

Ce dispositif de connexion 7 est agencé pour être rendu solidaire, par exemple par sertissage, du balai d'essuyage qui se déplace sur le pare-brise de véhicule. Un tel balai d'essuyage est entraîné en rotation par le bras d'essuyage.

Le dispositif de connexion 7 assure une liaison mécanique dite complète avec le balai d'essuyage, en ce sens qu'il n'existe pas de degré de liberté. Cette liaison mécanique complète est assurée par un moyen de solidarisation 8 agencé sur le dispositif de connexion 7.

Le dispositif de connexion 7 comprend une embase 10 qui s'étend longitudinalement et transversalement. Cette embase 10 reçoit le moyen de solidarisation 8 sur le balai d'essuyage, et plus particulièrement sur au moins une vertèbre de rigidification de ce balai d'essuyage. Ce moyen de solidarisation 8 prend par exemple la forme d'au moins une saignée 11 ménagée dans l'embase 10.

Le dispositif de connexion 7 assure une fonction de transport et de distribution d'un liquide de lavage du pare-brise. Pour ce faire, le dispositif de connexion 7 comprend au moins un conduit 9 dans lequel circule le liquide de lavage en vue d'être distribué dans le balai d'essuyage, de chaque côté du dispositif de connexion 7. Ce conduit 9 est formé par un évidement rectiligne et parallèle à la direction longitudinale OX, ménagé dans le dispositif de connexion 7 selon l'invention. Un tel conduit 9 est ménagé sur un côté de l'embase 10, cette dernière donnant naissance à deux embouts 14 qui délimitent le conduit 9, et sur lesquels s'enfile un moyen de distribution du liquide de lavage constitutif du balai d'essuyage, par exemple le déflecteur d'air évoqué plus haut.

Selon un exemple de réalisation, l'embase 10 comprend deux saignées 11 opposées l'une à l'autre et chacune ménagée dans des bras 12 et 13 délimitant l'embase 10. Ces deux saignées 11 forment ainsi des crochets aptes à venir en prise sur le balai d'essuyage.

L'embase 10 est surmontée d'un flanc 15, par exemple, issu de cette embase 10. Ce flanc 15 présente une dimension transversale et une dimension longitudinale inférieures à celles de l'embase 10. Le flanc 15 est par exemple centré sur l'embase 10, selon la direction transversale OY et la direction longitudinale OX.

Le flanc 15 reçoit un canal 16 de circulation par lequel le liquide de lavage peut arriver. Un tel canal 16 est ainsi délimité par le flanc 15 et par un embout 17 qui prend naissance sur le flanc 15, et sur lequel s'enfile le tube de transport du liquide de lavage du pare-brise qui chemine le long du bras d'essuyage.

Ce canal 16 est relié hydrauliquement au conduit 9. Il comprend ainsi une première portion qui s'étend sensiblement selon la direction longitudinale OX, suivie d'une deuxième portion qui relie la première portion au conduit 9. Cette deuxième portion est ainsi transversale au conduit 9.

On notera que le flanc 15 peut présenter une pluralité de nervures 18 qui assurent un renforcement mécanique du flanc 15.

Le dispositif de connexion 7 et le bras d'essuyage sont reliés mécaniquement, notamment via l'adaptateur, par le moyen de liaison 26, par exemple la liaison pivot. En ce qui concerne le dispositif de connexion 7, cette liaison pivot est mise en oeuvre par une cavité 19 réalisée dans le flanc 15. Cette cavité 19 s'étend selon la direction transversale OY. En d'autres termes, la cavité 19 peut être un trou d'axe central parallèle à la direction transversale OZ. Dans le plan OXZ, la cavité 19 présente une section circulaire.

Selon l'invention, le dispositif de connexion 7 comprend une zone 20 aménagée le long du conduit 9 permettant de répartir une pluralité d'orifices de projection 21 du liquide de lavage. Une telle zone 20 est dépourvue de forme susceptible de gêner la répartition des orifices de projection 21.

Le ou les orifices de projection 21 sont par exemple des trous d'axe transversal, et avantageusement perpendiculaire, à l'axe du conduit 9. Ces trous relient ainsi le conduit 9 au milieu environnant le dispositif de connexion 7.

Selon un exemple de réalisation, cette zone 20 est ménagée sur une face externe 24 de l'embase 10. Cette zone s'étend selon la direction longitudinale OX, parallèlement au conduit 9, et sur un secteur angulaire déterminé autour de l'axe du conduit 9. Cette zone 20 est par exemple formée sur une partie inférieure de l'embase 10, c'est-à-dire de manière adjacente au moyen de solidarisation 8. En d'autres termes, cette zone 20 peut être aménagée dans une partie de l'embase 10 où le bras 13 prend naissance.

Le flanc 15 surplombant l'embase 10, on considère que la zone 20 est aménagée sur une portion de la face externe 24 de l'embase 10 opposée au flanc 15 par rapport au conduit 9.

Sur l'exemple de la figure 2, le canal 16 débouche de l'embase 10 par un manchon 22. Un tel manchon 22 s'étend au niveau de la zone 20 et résulte du procédé de fabrication du dispositif de connexion 7. Ce manchon 22 est obturé par un élément rapporté sur une partie terminale du manchon. Il s'agit par exemple d'un couvercle soudé sur le manchon par un procédé de soudage par ultrasons. L'élément peut également être formé par une bille logée à force dans le manchon, de manière à étancher ce dernier. Le couvercle ou la bille exposés ci-dessus forment des exemples de réalisation d'un dispositif de fermeture du canal 16.

Lorsque l'embase 10 est pourvue du manchon 22 détaillé ci-dessus, le dispositif de connexion 7 comprend au moins deux zones 20 distinctes et ménagées de part et d'autre du manchon 22.

Selon un exemple de réalisation, il est ainsi considéré qu'une zone 20 est formée dès lors qu'il existe une paroi lisse de la face externe 24 de l'embase 10, qui s'étend selon la direction longitudinale OX le long du conduit 9 sur au moins 50% de cette face externe 24, cette paroi lisse étant alors pourvu des orifices de projection 21. Le caractère lisse de la paroi est formé dès lors que la paroi est dépourvue de forme susceptible de gêner le perçage d'un orifice de projection 21.

Selon un autre exemple illustré sur la figure 2, la zone 20 est formée par une rainure 23 pratiquée dans l'embase 10 le long du conduit 9. Une telle rainure 23 est en retrait vers le conduit 9 par rapport à la face externe 24 qui délimite l'embase 10. En d'autres termes, cette rainure 23 est une cavité rectiligne aménagée le long du conduit 9. La longueur des trous formant orifice de projection est ainsi réduite à l'épaisseur de l'embase 10 au droit de la rainure 23. Cette dernière présente ainsi un fond lisse au niveau duquel sont réalisés les perçages générateurs des orifices de projection 21.

On notera que la répartition des orifices de projection 21 ménagés au niveau de la zone 20 peut être non-constante. En d'autres termes, l'espacement qui sépare chaque couple d'orifices de projection 21 est différent. Il peut, par exemple, être évolutif et linéaire, notamment croissant ou décroissant d'une extrémité longitudinale à l'autre du dispositif de connexion 7.

Le dispositif de connexion 7 décrit ci-dessus est avantageusement unitaire, c'est-à-dire constitué par une même matière synthétique. Ce dispositif de connexion peut ainsi être fabriqué au cours d'une unique opération de moulage, notamment par injection.

Dans le système d'essuyage selon l'invention, on note que les orifices d'aspersion du balai d'essuyage et les orifices de projection 21 du dispositif de connexion 7 sont répartis selon la direction longitudinale du balai d'essuyage, de manière à respecter un espacement non constant entre orifices. En d'autres termes, les orifices de projection ménagés dans le dispositif de connexion 7 sont réalisés dans la continuité des orifices d'aspersion réalisés au niveau de la rampe de projection du balai d'essuyage. Le principe de répartition défini dans le document WO2011/160952A1 n'est ainsi pas interrompu par le dispositif de connexion 7, ce qui améliore significativement le nettoyage de la vitre du véhicule.

Selon un exemple, la variabilité d'un tel espacement peut être linéaire, de manière croissante ou décroissante d'une extrémité longitudinale à l'autre du balai d'essuyage constitutif du système d'essuyage selon l'invention.

Le dispositif de connexion évoqué dans la description des figures 1 et 2 est particulièrement adapté pour relier mécaniquement un bras d'essuyage à un balai d'essuyage de type balai plat, la liaison pivot permettant de mettre en oeuvre une rotation du balai d'essuyage par rapport au bras d'essuyage. Ces composants forment ainsi un ensemble d'essuyage pour véhicule automobile.

Le balai d'essuyage de cet ensemble d'essuyage comprend une lame d'essuyage, autrement appelée raclette, qui s'étend longitudinalement le long du balai d'essuyage. Cette dernière est un composant souple du balai d'essuyage en appui contre la face extérieure du pare-brise à essuyer.

Le balai d'essuyage comprend encore au moins un élément dans lequel est ménagé au moins un conduit apte à canaliser le liquide de lavage du pare-brise. Selon un exemple de réalisation, l'élément est un déflecteur d'air qui coiffe une partie supérieure du balai d'essuyage, un tel déflecteur d'air étant notamment muni d'une aube déflectrice agencée pour utiliser l'effet dynamique du déplacement du véhicule pour augmenter la force d'appui du balai d'essuyage sur le pare-brise.

Le balai d'essuyage est pourvu de deux éléments distincts enfilés sur le balai d'essuyage de part et d'autre du dispositif de connexion selon l'invention. A titre d'exemple de réalisation, les deux éléments présentent une structure identique à celle décrite ci-dessus, c'est-à-dire délimitant au moins un conduit et présentant au moins une aube déflectrice.

Le balai d'essuyage comprend également au moins un dispositif de rigidification de la lame d'essuyage. Un tel dispositif de rigidification peut être formé par une ou deux vertèbres, ces dernières prenant la forme d'une lame métallique qui précontraint le balai d'essuyage de manière à suivre une courbe quand celui-ci n'est pas appliqué contre le pare-brise. La ou les deux vertèbres sont rendues solidaires de la lame d'essuyage constitutive du balai d'essuyage, par exemple au moyen du connecteur et/ou à l'aide d'un embout d'extrémité enfilé sur les extrémités longitudinales du balai d'essuyage. La lame d'essuyage peut être pourvu de deux fentes ouvertes le long du balai d'essuyage et disposées latéralement sur celle-ci, ces deux fentes recevant chacune une vertèbre de rigidification. Alternativement, le balai peut comprendre un support dans lequel est ménagée une rainure qui reçoit un talon de la lame d'essuyage et un logement longitudinale dans lequel est installée une unique vertèbre de rigidification.

Le connecteur constitutif de l'invention est alors avantageusement serti sur la ou les vertèbres de rigidification. Les embouts d'extrémités peuvent également rapprocher les moyens de rigidification l'un vers l'autre, de sorte à pincer la lame d'essuyage du balai d'essuyage.

## Revendications

1. Dispositif de connexion (7) apte à relier un balai d'essuyage (3) à un bras d'essuyage (1), comprenant au moins un moyen de solidarisation (8) sur le balai d'essuyage (3) et un moyen de liaison (26) avec le bras d'essuyage (1), ledit dispositif de connexion (7) comprenant également au moins un conduit (9) dans lequel un liquide est apte à circuler et qui s'étend selon une direction longitudinale (OX) d'extension du balai d'essuyage (3), ledit dispositif de connexion (7) est formé par une embase (10) dans laquelle est ménagé le conduit (9), ladite embase (10) étant surmontée par un flanc (15) dans lequel est ménagé le moyen de liaison (26) **caractérisé par le fait qu'**il comprend au moins une zone (20) aménagée le long du conduit (9) permettant une répartition d'une pluralité d'orifices de projection (21) du liquide, ladite zone (20) étant aménagée sur une face externe (24) de l'embase (10).

2. Dispositif selon la revendication 1, dans lequel la zone (20) est aménagée sur une portion de la face externe (24) opposée au flanc (15) par rapport au conduit (9).

3. Dispositif selon l'une quelconque des revendications précédentes, dans lequel la zone (20) présente une paroi lisse sur au moins 50% de la face externe (24) selon une direction longitudinale (OX) d'extension du conduit (9).

4. Dispositif selon l'une quelconque des revendications précédentes, dans lequel la zone (20) est formée par une rainure (23) pratiquée dans l'embase (10) le long du conduit (9).

5. Dispositif selon la revendication 4, dans lequel la rainure (23) est délimitée par un fond lisse au travers duquel est pratiquée la pluralité d'orifices de projection (21).

6. Dispositif selon l'une quelconque des revendications précédentes, dans lequel est prévu un canal (16) d'alimentation du conduit (9) en liquide, un tel canal (16) étant terminé par un manchon (22) qui débouche de l'embase (10) au niveau de la zone (20).

7. Dispositif selon la revendication 6, dans lequel le manchon (22) est obturé par un dispositif de fermeture du canal (16).

8. Dispositif selon l'une quelconque des revendications précédentes, dans lequel est prévu un espacement non-constant selon la direction longitudinale (OX) entre les orifices de projection (21) ménagés dans la zone (20).

9. Système d'essuyage d'une vitre d'un véhicule comprenant un balai d'essuyage (3) relié mécaniquement à un bras d'essuyage (1) au moins par un dispositif de connexion (7) selon l'une quelconque des revendications précédentes.

10. Système selon la revendication 9, dans lequel le balai d'essuyage (3) comprend au moins une rampe de projection (25) d'un liquide de lavage de la vitre alimentée en liquide de lavage par le dispositif de connexion (7).

11. Système selon la revendication 10, dans lequel la rampe de projection (25) comprend une multiplicité d'orifices d'aspersion, lesdits orifices d'aspersion et lesdits orifices de projection (21) étant répartis selon la direction longitudinale (OX) du balai d'essuyage (3) de manière à respecter un espacement non-constant entre orifices.

## Patentansprüche

1. Verbindungsvorrichtung (7), die ein Wischerblatt (3) mit einem Wischerarm (1) verbinden kann, die mindestens eine Einrichtung zur festen Verbindung (8) auf dem Wischerblatt (3) und eine Verbindungseinrichtung (26) mit dem Wischerarm (1) enthält, wobei die Verbindungsvorrichtung (7) ebenfalls mindestens eine Rohrleitung (9) enthält, in der eine Flüssigkeit fließen kann und die sich gemäß einer Längsausdehnungsrichtung (OX) des Wischerblatts (3) erstreckt, wobei die Verbindungsvorrichtung (7) von einem Sockel (10) geformt wird, in dem die Rohrleitung (9) vorgesehen ist, wobei der Sockel (10) von einer Flanke (15) überlagert wird, in der die Verbindungseinrichtung (26) vorgesehen ist, **dadurch gekennzeichnet, dass** sie mindestens eine entlang der Rohrleitung (9) eingerichtete Zone (20) enthält, die eine Verteilung einer Vielzahl von Öffnungen (21) zum Verspritzen der Flüssigkeit ermöglicht, wobei die Zone (20) an einer Außenseite (24) des Sockels (10) eingerichtet ist.

2. Vorrichtung nach Anspruch 1, wobei die Zone (20) auf einem Abschnitt der Außenseite (24) entgegengesetzt zur Flanke (15) bezüglich der Rohrleitung (9) eingerichtet ist.

3. Vorrichtung nach einem der vorhergehenden Ansprüche, wobei die Zone (20) über mindestens 50% der Außenseite (24) gemäß einer Längsausdehnungsrichtung (OX) der Rohrleitung (9) eine glatte Wand aufweist.

4. Vorrichtung nach einem der vorhergehenden Ansprüche, wobei die Zone (20) von einer Rille (23) geformt wird, die im Sockel (10) entlang der Rohrleitung (9) eingearbeitet ist.

5. Vorrichtung nach Anspruch 4, wobei die Rille (23) von einem glatten Boden begrenzt wird, durch den hindurch die Vielzahl von Spritzöffnungen (21) eingearbeitet ist.

6. Vorrichtung nach einem der vorhergehenden Ansprüche, wobei ein Kanal (16) zur Versorgung der Rohrleitung (9) mit Flüssigkeit vorgesehen ist, wobei ein solcher Kanal (16) in einer Muffe (22) endet, die vom Sockel (10) im Bereich der Zone (20) mündet.

7. Vorrichtung nach Anspruch 6, wobei die Muffe (22) von einer Schließvorrichtung des Kanals (16) verschlossen wird.

8. Vorrichtung nach einem der vorhergehenden Ansprüche, wobei ein nicht-konstanter Abstand gemäß der Längsrichtung (OX) zwischen den in der Zone (20) vorgesehenen Spritzöffnungen (21) vorgesehen ist.

9. Wischsystem einer Scheibe eines Fahrzeugs, das ein Wischerblatt (3) enthält, das mechanisch mit einem Wischerarm (1) mindestens durch eine Verbindungsvorrichtung (7) nach einem der vorhergehenden Ansprüche verbunden ist.

10. System nach Anspruch 9, wobei das Wischerblatt (3) mindestens eine Spritzrampe (25) einer Waschflüssigkeit der Scheibe enthält, die von der Verbindungsvorrichtung (7) mit Waschflüssigkeit versorgt wird.

11. System nach Anspruch 10, wobei die Spritzrampe (25) eine Vielzahl von Sprühöffnungen enthält, wobei die Sprühöffnungen und die Spritzöffnungen (21) gemäß der Längsrichtung (OX) des Wischerblatts (3) so verteilt sind, dass sie einen nicht-konstanten Abstand zwischen Öffnungen einhalten.

## Claims

1. A connection device (7) suitable for connecting a wiper blade (3) to a wiper arm (1), comprising at least one means (8) for fixing to the wiper blade (3) and a means (26) for linking to the wiper arm (1), said connection device (7) also comprising at least one duct (9) in which a fluid is able to circulate and which extends in a longitudinal extension direction (OX) of the wiper blade (3), said connection device (7) is formed by a base unit (10) in which the duct (9) is arranged, said base unit (10) having on its top a flank (15) in which the linking means (26) is arranged **characterized in that** it comprises at least one zone (20) arranged along the duct (9) and allowing a distribution of a plurality of fluid spray openings (21), said zone (20) being arranged on an outer face (24) of the base unit (10).

2. The device as claimed in claim 1, wherein the zone (20) is arranged on a portion of the outer face (24) opposite the flank (15) relative to the duct (9) .

3. The device as claimed in any of the preceding claims, wherein the zone (20) has a smooth wall over at least 50% of the outer face (24) in a longitudinal extension direction (OX) of the duct (9) .

4. The device as claimed in any of the preceding claims, wherein the zone (20) is formed by a groove (23) produced in the base unit (10) along the duct (9).

5. The device as claimed in claim 4, wherein the groove (23) is delimited by a smooth base through which the plurality of spray openings (21) is produced.

6. The device as claimed in any of the preceding claims, wherein a channel (16) is provided for supplying fluid to the duct (9), such a channel (16) being terminated by a sleeve (22) which opens from the base unit (10) at the zone (20).

7. The device as claimed in claim 6, wherein the sleeve (22) is sealed by a device for closing the channel (16).

8. The device as claimed in any of the preceding claims, wherein a non-constant spacing in the longitudinal direction (OX) is provided between the spray openings (21) arranged in the zone (20).

9. A wiper system for a window of a vehicle, comprising a wiper blade (3) mechanically connected to a wiper arm (1) at least by one connection device (7) as claimed in any of the preceding claims.

10. The system as claimed in claim 9, wherein the wiper blade (3) comprises at least one bar (25) for spraying a window washing fluid, which is supplied with washing fluid via the connection device (7).

11. The system as claimed in claim 10, wherein the spray bar (25) comprises a plurality of sprinkler openings, said sprinkler openings and said spray openings (21) being distributed in the longitudinal direction (OX) of the wiper blade (3) so as to observe a non-constant spacing between openings.
